# FASCICULE DE BREVET EUROPEEN

(11) **EP 1 932 653 B1**
(45) Date de publication et mention de la délivrance du brevet: **03.07.2013**
(21) Numéro de dépôt: 07120856.5
(22) Date de dépôt: 16.11.2007
(51) Int. Cl.: B29C 70/44, B29C 70/46, B29C 70/48, B29C 70/24, B29C 70/34, B29C 70/22, C08J 5/04

(54) **Procédé de réalisation d'un ensemble carter-divergent**
Verfahren zur Herstellung einer divergenten Gehäuseanordnung
Method for producing a case-divergent assembly

(30) Priorité: 15.12.2006 FR 0655553
(43) Date de publication de la demande: 18.06.2008
(73) Titulaire: HERAKLES, 33185 Le Haillan (FR)
(72) Inventeur: Lalande, Joëlle, 33200 Bordeaux (FR); Ballion, Frédéric, 33000 Bordeaux (FR)
(74) Mandataire: Desormiere, Pierre-Louis

(56) Documents cités:
- EP-A- 0 414 214
- EP-A- 0 662 391
- EP-A- 1 125 728
- WO-A-99/21697
- WO-A-2006/064167
- DE-A1- 10 036 169
- DE-A1- 10 320 791
- GB-A- 1 218 447
- US-A- 4 094 852
- US-A- 5 876 322

## Description

### Arrière plan de l'invention

L'invention concerne la réalisation d'un ensemble carter-divergent destiné notamment à constituer des composants pour tuyères d'échappement de fusée ou cône de sortie.

Ce type de pièce comporte une partie interne, appelée divergent, qui doit en premier lieu présenter une bonne tenue à la température et l'ablation car elle est directement soumise au flux de gaz chauds. Elle comporte également une partie externe, appelée carter, dont le rôle principal est de conférer une bonne rigidité à la pièce.

En raison notamment des propriétés spécifiques que doivent présenter le divergent et le carter, ces deux éléments sont fabriqués séparément. Ils sont ensuite réunis pour former un ensemble carter-divergent.

Un procédé actuellement utilisé pour former des divergents ou des carters composites consiste à draper et mouler des strates de tissu en carbone préimprégné par une résine, par exemple une résine phénolique. Plus précisément, le procédé comprend le drapage des strates de tissu préimprégné suivant un motif en rosette sur un moule présentant la forme de l'élément à réaliser, le compactage des strates sous vide au moyen d'une membrane, la mise en place d'un moule femelle si nécessaire, la polymérisation en autoclave ou sous presse de l'ensemble, et le démoulage de la pièce. On obtient ainsi une pièce rigide à renfort fibreux.

Il existe encore d'autres procédés connus pour réaliser des divergents ou des carters composites tels que des procédés comprenant, par exemple, l'enroulement de filament, le tressage ou tricotage de manchons.

Cependant, avec ces procédés de fabrication, le nombre de composants ainsi que le temps nécessaires à la réalisation de l'ensemble carter-divergent est relativement important, ce qui engendre un coût de fabrication élevé.

Par ailleurs, puisque le divergent et le carter sont réalisés séparément, l'assemblage de ces deux éléments peut être complexe et présenter des difficultés de mise en oeuvre. Par exemple, l'alignement des surfaces de contact entre le carter et le divergent nécessite des usinages supplémentaires qui augmentent d'autant la durée et le coût de fabrication. En outre, le collage des deux éléments requière une préparation des surfaces d'assemblage et une maîtrise du collage pour obtenir une bonne adhérence en tout point.

En outre, les procédés ci-dessus sont délicats à mettre en oeuvre. En particulier, le drapage de strates de fibres pour former le renfort fibreux est une opération manuelle qui s'effectue directement sur un support de mise en forme et qui ne permet pas un contrôle précis de l'orientation et de la quantité des fibres en tout point du renfort.

Par ailleurs, la plupart des procédés existants utilisent des fibres préimprégnées qui présentent une moins grande souplesse que des fibres sèches, ce qui rend encore plus difficile la conformation des strates à la forme d'une pièce de révolution tel qu'un divergent et le carter associé.

Le document WO 2006/064167 divulgue la formation d'une pièce épaisse à partir d'une préforme fibreuse tridimensionnelle maintenue en forme dans un moule dans lequel on injecte une résine thermodurcissable qui est ensuite polymérisée.

Le document WO 99/21697 décrit la réalisation d'une structure pour renfort fibreux comprenant une nappe de fibres unidirectionnelles formée à partir d'un alignement d'une pluralité de câbles de fibres unidirectionnelles.

Le document EP 0 662 391 décrit un procédé de réalisation de pièces tubulaires destinées à former en particulier des manches ou tiges pour des articles de sport. Ce document décrit, par exemple, la réalisation d'une crosse de hockey qui consiste à former un renfort fibreux par réalisation de trois couches de fibres tissées successivement l'une sur l'autre, chaque couche étant réalisée avec des fibres différentes. Une fois les différentes couches tissées, le renfort est imprégné par une résine nylon.

### Objet et description succincte de l'invention

La présente invention a pour but de remédier aux inconvénients des procédés de l'art antérieur en proposant un procédé pour réaliser un ensemble carter-divergent permettant de réduire le nombre de composants et d'opérations nécessaires à sa réalisation.

Ce but est atteint grâce à un procédé de réalisation d'un ensemble carter-divergent comprenant les étapes suivantes :
- formation d'un renfort fibreux comprenant la réalisation d'une première préforme fibreuse avec un premier type de fibre, ladite première préforme correspondant à la partie divergent de l'ensemble carter-divergent à réaliser, et la réalisation d'une seconde préforme fibreuse avec un second type de fibre différent du premier type de fibre, ladite seconde préforme, correspondant à la partie carter de l'ensemble carter-divergent à réaliser, étant disposée sur la première préforme,
- maintien du renfort fibreux dans une forme identique à celle de l'ensemble carter-divergent à réaliser,
- imprégnation dudit renfort fibreux avec une résine thermodurcissable et polymérisation de la résine.

Ainsi, en réalisant un renfort fibreux associant la préforme fibreuse du divergent et la préforme fibreuse du carter, le procédé de l'invention permet la réalisation d'un ensemble carter-divergent composite en un minimum d'opérations. Une fois réalisé, le renfort fibreux est imprégné une seule fois avec une résine, constituant, après polymérisation, une matrice commune entre le divergent et le carter de manière à réaliser ces deux structures au sein d'une même pièce. Le nombre d'opérations nécessaires à la réalisation de l'ensemble carter-divergent est considérablement réduit. En outre, en constituant un renfort fibreux commun à partir de deux préformes fibreuses "sèches" correspondant chacune respectivement à la partie divergent et à la partie carter, l'ajustement entre ces deux pièces est relativement aisé puisque les préformes fibreuses formées de fibres sèches présentent une bonne conformabilité.

Par ailleurs, la diminution du nombre de composants et d'opérations pour la réalisation de l'ensemble carter-divergent obtenue avec le procédé de l'invention permet une réduction de coût de fabrication importante notamment en raison du fait qu'il est possible d'utiliser un seul outillage pour réaliser le renfort fibreux et un seul outillage pour réaliser l'imprégnation et la polymérisation de la résine avec un seul cycle d'injection et de polymérisation. Avec le procédé de l'invention, aucun collage et aucun usinage intermédiaire sont nécessaires.

La première préforme fibreuse, destinée à former la partie divergent, est réalisée avec des fibres présentant une faible conductivité thermique, c'est-à-dire des fibres présentant une conductivité thermique inférieure à 50 W.m⁻¹.K⁻¹, et de préférence inférieure à 20 W.m⁻¹.K⁻¹. De telles fibres peuvent être notamment des fibres de carbone à précurseur brai, ou des fibres de carbone à précurseur PAN (polyacrylonitrile), ou des fibres de carbone à précurseur rayonne.

La seconde préforme fibreuse, destinée à former la partie carter, est réalisée avec des fibres présentant une résistance à la traction d'au moins 3000 MPa, de préférence supérieure ou égale à 3400 MPa. Ces fibres présentent en outre un module de Young ou module d'élasticité d'au moins 200 Gpa. De telles fibres peuvent être notamment des fibres de carbone à précurseur PAN ou des fibres de carbone à précurseur brai.

Selon un aspect de l'invention, la première préforme fibreuse est réalisée à partir d'une pluralité de strates fibreuses annulaires comprenant chacune au moins une première série de fibres orientées suivant un angle α et une deuxième série de fibres orientées suivant un angle -α. Les strates fibreuses annulaires sont empilées sur un outillage de forme conique ou de forme coquetier, chaque strate étant disposée sur ledit outillage suivant un angle β par rapport à l'axe de l'outillage.

Les première et deuxième séries de fibres de chaque strate fibreuse annulaire sont réalisées par placement et couture automatiques de fibres entre deux canevas définissant un espace annulaire, chaque strate étant extraite des canevas par découpe après réalisation d'une liaison circulaire dans ladite strate. De cette manière, les strates fibreuses destinées à former la préforme de la partie divergent peuvent être réalisées à plat entre deux canevas, ce qui permet de contrôler précisément l'orientation des fibres. En outre, en utilisant une machine à broder automatique pour placer les fibres entre les deux canevas, on peut automatiser le placement des fibres et former des strates fibreuses identiques notamment en ce qui concerne l'orientation et la quantité des fibres utilisées.

Selon un mode de réalisation, la deuxième préforme est réalisée à partir d'au moins une première et une deuxième strates fibreuses superposées, la première strate comportant des fibres orientées suivant une direction déterminée, la deuxième strate étant réalisée en disposant sur la première strate une strate de fibres orientées perpendiculairement aux fibres de la première strate. La première strate est réalisée par placement et couture automatiques de fibres entre deux canevas définissant un espace annulaire, la strate étant extraite des canevas par découpe après réalisation d'une liaison circulaire dans ladite strate, et la deuxième strate étant réalisée par bobinage filamentaire sur la première strate maintenue en forme sur un outillage de forme coquetier ou conique.

Selon un autre mode de réalisation, la deuxième préforme fibreuse est réalisée à partir d'au moins une strate fibreuse comprenant au moins une première et une deuxième séries de fibres superposées, la première série comportant des fibres orientées suivant un angle α et la seconde série comportant des fibres orientées suivant un angle -α. Les première et deuxième séries de fibres de chaque strate fibreuse sont réalisées par placement et couture automatiques de fibres entre deux canevas définissant un espace annulaire, chaque strate étant extraite des canevas par découpe après réalisation d'une liaison circulaire dans ladite strate.

La deuxième préforme fibreuse peut être réalisée, soit indépendamment de la première préforme, soit directement sur la première préforme fibreuse.

Le renfort fibreux formé des première et seconde préformes fibreuses superposées est ensuite placé dans un outillage, l'outillage comprenant un moule et un contre-moule définissant un espace interne dans lequel est maintenu le renfort. La résine thermodurcissable est alors injectée à la base du renfort, un gradient de pression étant établi dans ledit espace interne de manière à faire circuler la résine injectée à la base du renfort vers le sommet dudit renfort. L'injection et la polymérisation est ainsi réalisée avec le même outillage et en un seul cycle.

La résine thermodurcissable est une résine de polyaddition présentant des caractéristiques structurales et ayant un taux de coke d'au moins 50 %.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue de dessus montrant le placement de fibres suivant deux orientations distinctes conformément à un mode de réalisation de l'invention,
- la figure 2 est une vue schématique de dessus montrant le placement d'une première série de fibres entre deux canevas conformément à un mode de réalisation de l'invention,
- la figure 3 est une vue agrandie en perspective d'une partie (repère III) de la figure 2 montrant le placement et la couture de fibres par une machine à broder automatique,
- la figure 4 est une vue agrandie d'une partie (repère IV) de la série de fibres de la figure 2 sur laquelle sont réalisés le placement et la couture de fibres supplémentaires par une machine à broder automatique,
- les figures 5A et 5B sont des vues schématiques montrant la réalisation d'une strate fibreuse ayant des fibres suivant deux orientations distinctes,
- la figure 6 est une vue en demi coupe, suivant le repère VI, de la strate fibreuse de la figure 2 montrant la réalisation d'une couture circulaire,
- la figure 7 est une vue en demi coupe, suivant le repère VI, de la strate fibreuse de la figure 2 montrant le retrait de la strate des canevas,
- la figure 8 est une vue schématique de dessus montrant la strate fibreuse de la figure 2 après placement des deux séries de fibres, ajout des fibres supplémentaires et retrait des canevas,
- la figure 9 est une vue schématique montrant la réalisation de la préforme de la partie divergent par empilement de strates sur un outillage,
- la figure 10 est une vue partielle en perspective montrant le détail de la disposition des strates empilées dans la figure 9,
- la figure 11 une vue schématique en perspective de la préforme fibreuse de la partie divergent réalisée sur l'outillage de la figure 9,
- la figure 12 est une vue schématique de dessus montrant la réalisation d'une strate fibreuse conformément à un autre mode de réalisation de l'invention,
- la figure 13 est une vue agrandie d'une partie (repère XIII) de la strate de la figure 12 sur laquelle sont réalisés le placement et la couture de fibres supplémentaires par une machine à broder automatique,
- la figure 14 est une vue schématique de dessus montrant la strate fibreuse de la figure 12 après ajout de fibres supplémentaires et retrait des canevas,
- la figure 15 est une vue schématique en perspective d'un outillage de mise en forme utilisé pour la fabrication d'une préforme fibreuse de la partie carter,
- la figure 16 est une vue schématique en perspective de l'outillage de la figure 15 sur lequel est disposé la strate fibreuse de la figure 14,
- la figure 17 est une vue schématique de détail montrant le positionnement de barrettes de picots dans l'outillage de la figure 16,
- la figure 18 est une vue schématique en perspective d'une installation de bobinage filamentaire,
- la figure 19 est une vue schématique en perspective de l'outillage de la figure 16 comprenant en outre, sur la strate fibreuse, une strate de bobinage filamentaire,
- la figure 20 un renfort fibreux d'un ensemble carter-divergent formé par la réunion d'une préforme fibreuse de divergent avec une préforme fibreuse de carter,
- la figure 21 est une vue en perspective montrant l'outillage utilisé pour l'injection et la polymérisation de résine dans le renfort fibreux,
- la figure 22 est une vue schématique partielle en coupe montrant l'injection de résine dans le renfort fibreux,
- la figure 23 est une vue schématique en coupe d'une partie arrière d'un propulseur équipée d'un ensemble carter-divergent réalisé conformément à un procédé de l'invention.

### Description détaillée des modes de réalisation de l'invention

La présente invention propose un procédé pour réaliser un ensemble carter-divergent comprenant principalement la formation d'un renfort fibreux à partir de deux types de fibres et l'imprégnation de ce renfort avec une résine pour former une matrice. Le renfort fibreux est constitué de deux préformes fibreuses correspondant respectivement aux parties divergent et carter de l'ensemble à réaliser.

La première préforme destinée à former la partie du renfort fibreux correspondant au divergent est formée avec un premier type de fibres réfractaires présentant en particulier une faible conductivité thermique, c'est-à-dire des fibres présentant une conductivité thermique inférieure à 50 W.m⁻¹.K⁻¹ environ, et de préférence inférieure à 20 W.m⁻¹.K⁻¹. Ce premier type de fibre peut par exemple correspondre à des fibres de carbone à précurseur brai, à précurseur PAN (polyacrylonitrile) ou à précurseur rayonne.

La deuxième préforme destinée à former la partie du renfort fibreux correspondant au carter est formée avec un deuxième type de fibres présentant en particulier une haute résistance mécanique, c'est-à-dire des fibres présentant une résistance à la traction d'au moins 3000 MPa, de préférence supérieure ou égale à 3400 MPa, et présentant en outre un module de Young ou module d'élasticité d'au moins 200 Gpa. 3400 MPa. Les fibres de ce deuxième type peuvent être notamment des fibres de carbone à précurseur PAN (polyacrylonitrile) ou à précurseur brai.

La première préforme fibreuse correspondant à la partie "divergent" de l'ensemble carter-divergent à réaliser est formée à partir d'un empilement de strates fibreuses.

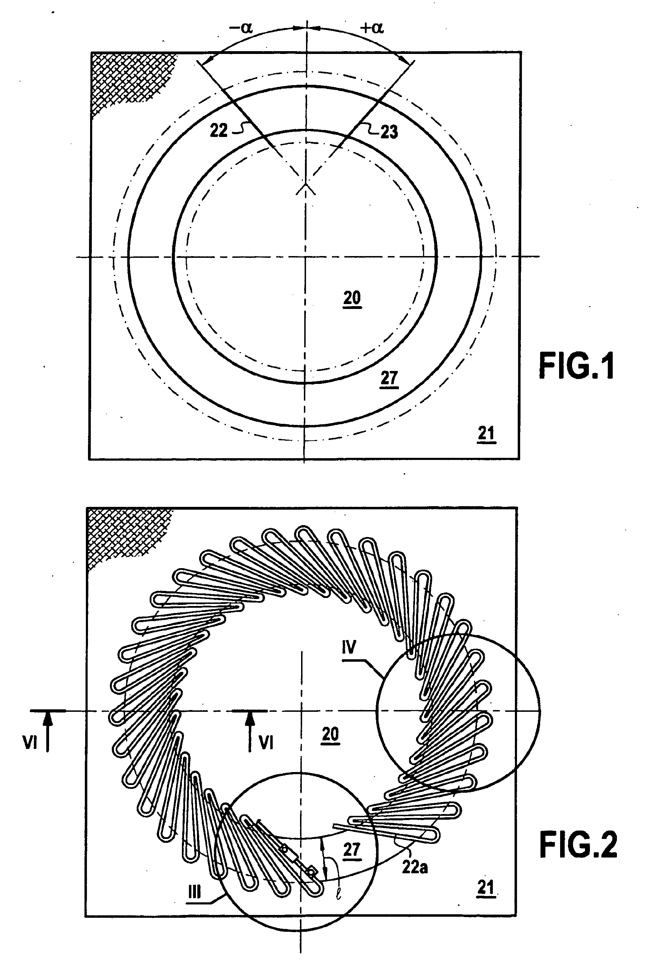

Selon un mode de mise en oeuvre de l'invention, chaque strate fibreuse est réalisée au départ à plat sur des canevas. Dans cette mise en oeuvre illustrée à la figure 1, chaque strate fibreuse est constituée de plusieurs séries de fibres 22 et 23, par exemple des fibres de carbone à précurseur brai, qui sont respectivement placées suivant deux orientations différentes. Ce placement de fibres suivant deux orientations permet de conférer à la pièce résultante une résistance vis-à-vis de sollicitations mécaniques ayant des directions différentes.

La strate fibreuse est réalisée à partir de deux canevas 20 et 21 définissant un espace annulaire 27. Les canevas 20 et 21 délimitent respectivement la périphérie interne et externe de l'espace annulaire 27 dont la largeur l est choisie légèrement supérieure aux dimensions nécessaires pour la strate.

Les séries de fibres 22 et 23 sont disposées en utilisant la technologie de placement TFP (pour "Tailored Fibre Placement"), c'est-à-dire en programmant une machine à broder automatique pour qu'elle place et couse les fibres 22 et 23 sur les canevas suivant respectivement un angle αa et un angle -α. Les angles α et -α peuvent correspondre par exemple respectivement à +45° et -45° environ. La technologie TFP consiste à placer et fixer par couture des fibres à des endroits précis sur un support (canevas) au moyen d'une machine à broder automatique.

Toutefois, dans la présente invention, la technologie TFP est utilisée d'une manière différente. En effet, comme décrit par exemple dans le document US 2004/0074589, la technologie TFP est utilisée pour placer et coudre des fibres sur un support qui fait partie intégrante de la strate. De façon différente, dans la présente invention, on utilise des supports (canevas) uniquement pour définir la forme et les dimensions de la strate fibreuse à réaliser. Les supports ne se retrouvent pas dans la strate fibreuse finale. Si on utilise la technologie TFP habituelle, la strate fibreuse brodée sur le support présente une trop grande rigidité et ne peut pas être déformée pour épouser, par exemple, une forme tridimensionnelle de révolution et de surface non développable.

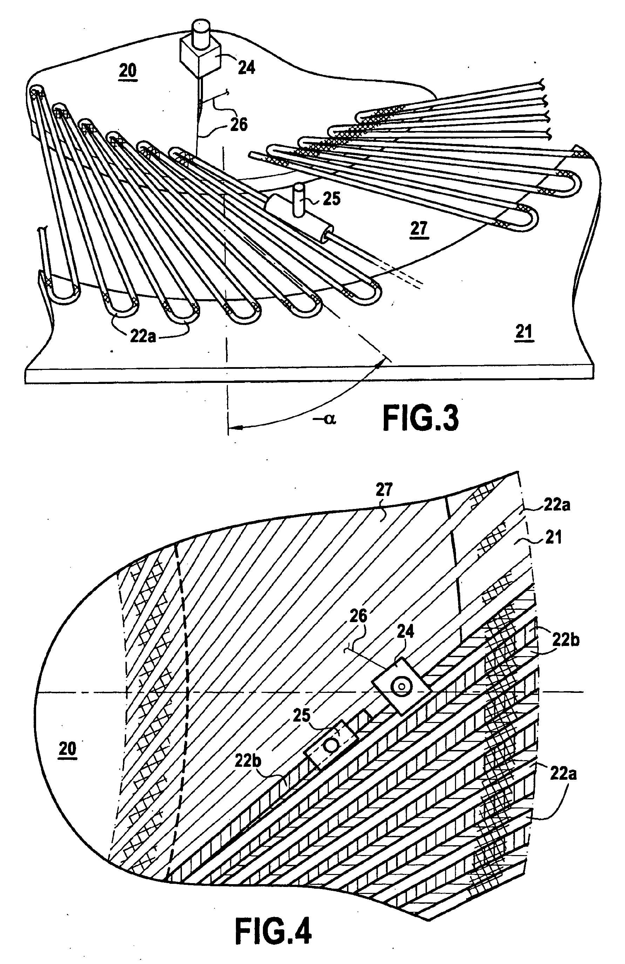

Concrètement, comme représentée sur les figures 2 et 3, la machine dispose par exemple dans l'espace annulaire 27 une première série de fibres 22a suivant l'angle -α. A cet effet, la machine délivre les fibres 22a à partir d'une bobine (non représentée) contenant par exemple des fils de fibres ex-brai et les positionne au moyen d'un guide 25 dans l'espace annulaire 23. Pour maintenir les fibres ainsi placées, la machine comprend une tête de couture 24 qui coud les fibres au niveau de leurs extrémités sur les canevas 20 et 21 avec un fil 26 très fin, par exemple en polyéthylène ou polyester. Le placement et la couture des fibres sont programmés dans la commande numérique de la machine.

De par la forme annulaire de l'espace 27 et le placement radial des fibres dans celui-ci, il subsiste des espaces entre les fibres placées par la machine qui sont plus importants au fur et à mesure que l'on se rapproche de la périphérie externe de l'espace annulaire. Pour conserver un taux de fibres sensiblement identique en tout point de la strate, on ajoute des fibres supplémentaires 22b de longueur variable dans les espaces présents entre les fibres 22a comme illustré sur la figure 4. Dans ce cas, la machine à broder automatique est programmée pour combler les espaces libres entre les fibres 22a en plaçant les fibres supplémentaires 22b dans ces espaces et en les cousant aux fibres adjacentes.

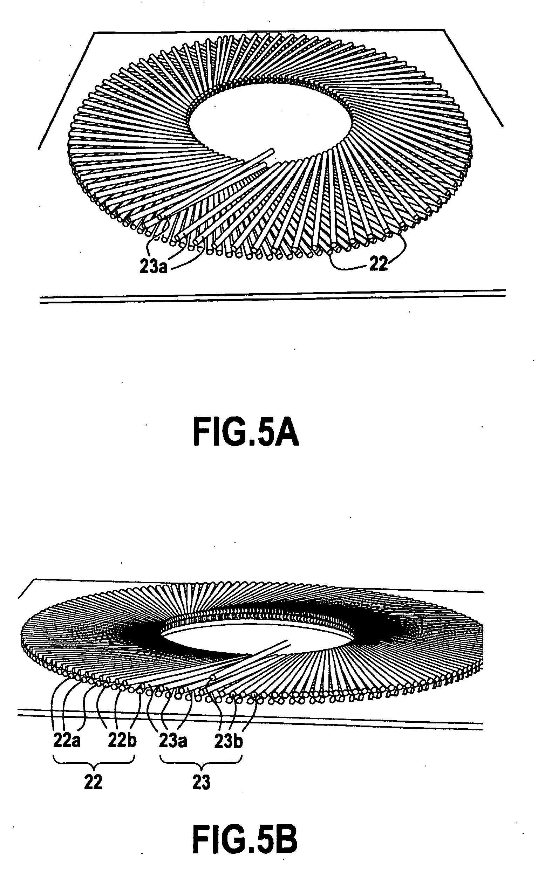

Comme illustré sur la figure 5A, la machine à broder dispose ensuite une série de fibres 23a suivant l'angle -α sur la série de fibres 22 (comprenant les fibres 22a et 22b). Des fibres supplémentaires 23b sont ensuite ajoutées pour combler les espaces présents entre les fibres 23a (figure 5B) et former ainsi une deuxième série de fibres 23 (fibres 23a et 23b).

Ces étapes sont éventuellement répétées pour former plusieurs séries de fibres superposées et disposées respectivement suivant l'angle -α, et α.

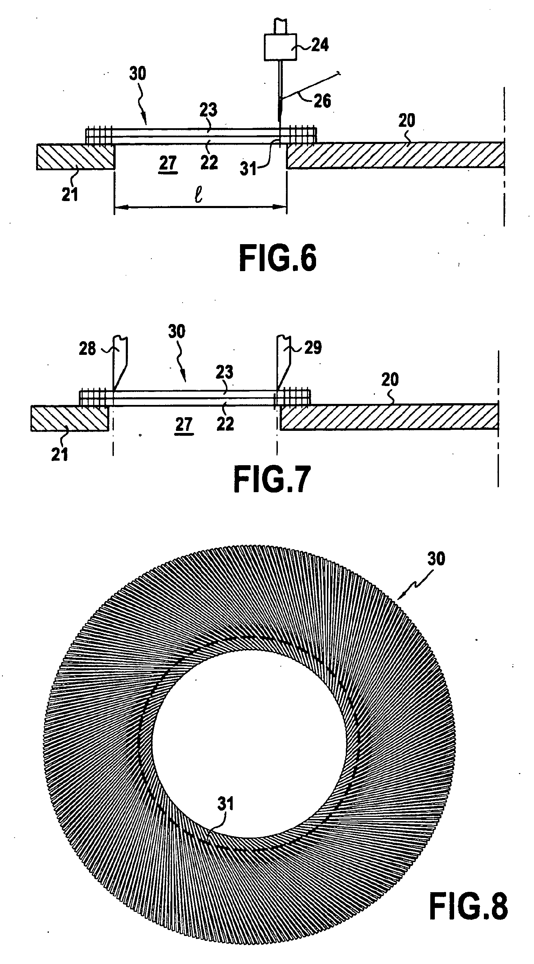

Une fois tous les espaces comblés, l'espace annulaire 27 est rempli par une strate 30 contenant au moins deux séries de fibres 22 et 23 orientées suivant deux directions différentes. On réalise alors une couture circulaire 31 (figure 6) au voisinage de la périphérie interne de l'espace annulaire pour maintenir les fibres avant le retrait de la strate fibreuse 30 des canevas qui peut être réalisé, par exemple, en découpant la strate 30 le long des périphéries interne et externe de l'espace annulaire 23 en utilisant des outils de coupe 28 et 29 (ex. couteaux, bistouris électriques, jets d'eau sous pressions, lasers, etc.) (figure 7).

On obtient alors une strate fibreuse 30 (figure 8) dont les fibres sont maintenues entre elles par la couture circulaire 31 tout en conservant une grande souplesse, ce qui permet de la positionner facilement sur un outillage.

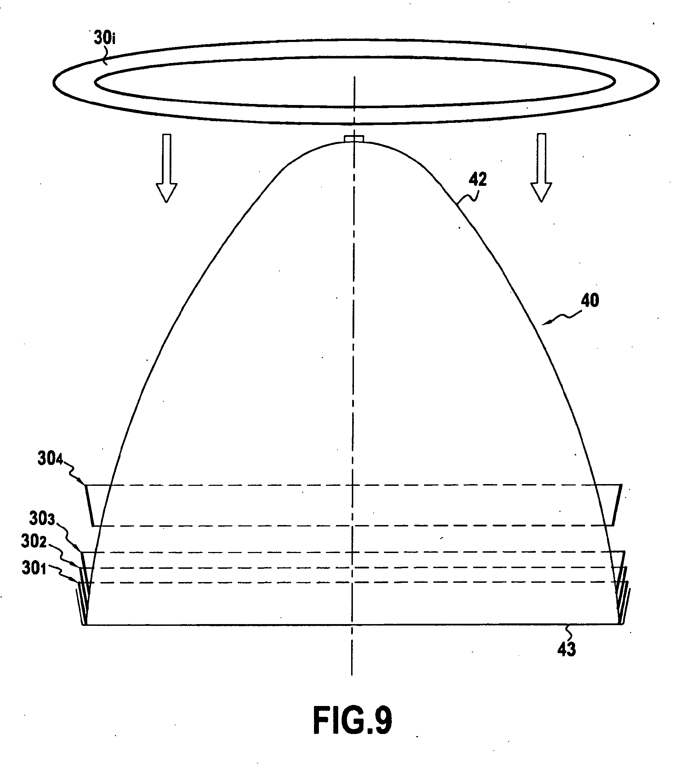

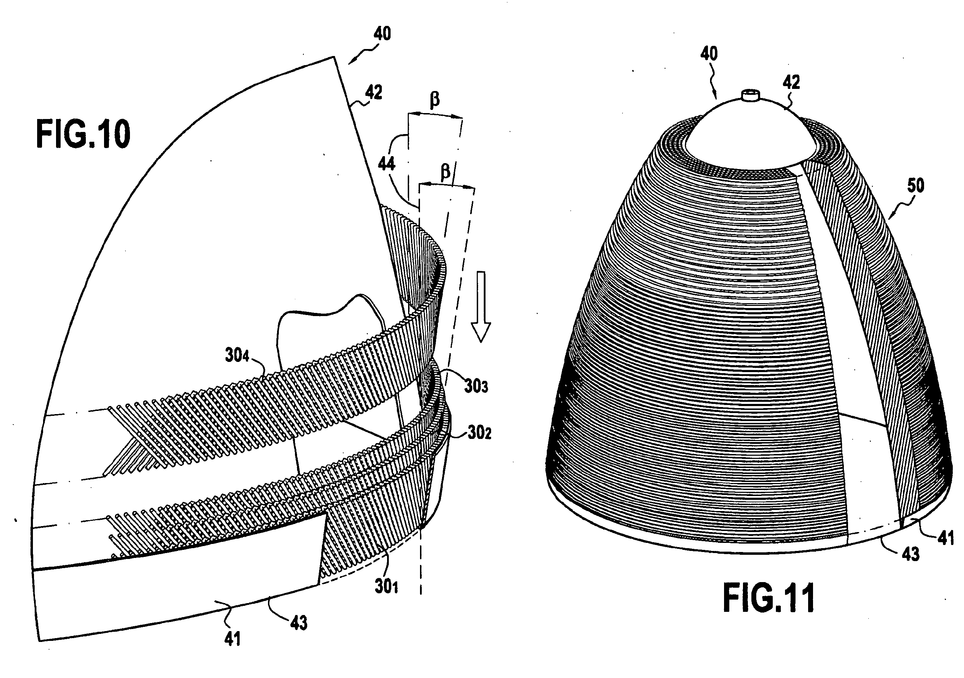

La préforme fibreuse correspondant à la partie divergent de l'ensemble carter-divergent est formée à partir d'un empilement d'une pluralité de strates fibreuses réalisées de la même façon celle décrite précédemment pour la strate fibreuse 30. Plus précisément, comme illustré sur les figures 9 et 10, on empile une pluralité de strates 30₁, 30₂, 30₃, 30₄, ..., 30ᵢ sur un outillage 40 présentant une forme coquetier correspondant à la forme du divergent à réaliser. Les strates 30₁ à 30ᵢ sont respectivement fabriquées avec un diamètre interne décroissant pour s'adapter au rétrécissement progressif de l'outillage entre sa base 43 et son sommet 42. Les strates 30₁ à 30ᵢ peuvent en outre être respectivement réalisées avec une largeur annulaire progressivement croissante de manière à augmenter l'épaisseur de paroi du divergent au fur et à mesure que l'on s'approche du sommet 42 de l'outillage 40. Comme illustré sur la figure 10, les strates sont de préférence disposées sur l'outillage de manière à former un angle β d'environ 10° par rapport à un axe 44 correspondant à l'axe du divergent. A cet effet, l'outillage 40 comprend au niveau de sa base 43 un rebord 41 permettant de maintenir les premières strates empilées suivant l'angle β, les strates suivantes conservant cette orientation dans l'empilement.

La figure 11 montre une préforme fibreuse de divergent 50 obtenue après empilement complet d'une pluralité de strates annulaires entre la base 43 et le sommet 42 de l'outillage 40 comme décrit précédemment.

Selon un mode de réalisation de l'invention, la deuxième préforme fibreuse correspondant à la partie "carter" de l'ensemble carter-divergent à réaliser est formée par superposition d'au moins une strate fibreuse ayant des fibres orientées suivant une première direction correspondant à l'axe de l'armature et appelée "strate à 0°" et d'une strate suivant une seconde direction perpendiculaire à l'axe de l'armature et aux fibres des strates à 0° et appelée "strate à 90°". Cette superposition de ces deux strates peut être répétées plusieurs fois en fonction de la rigidité requise pour le carter.

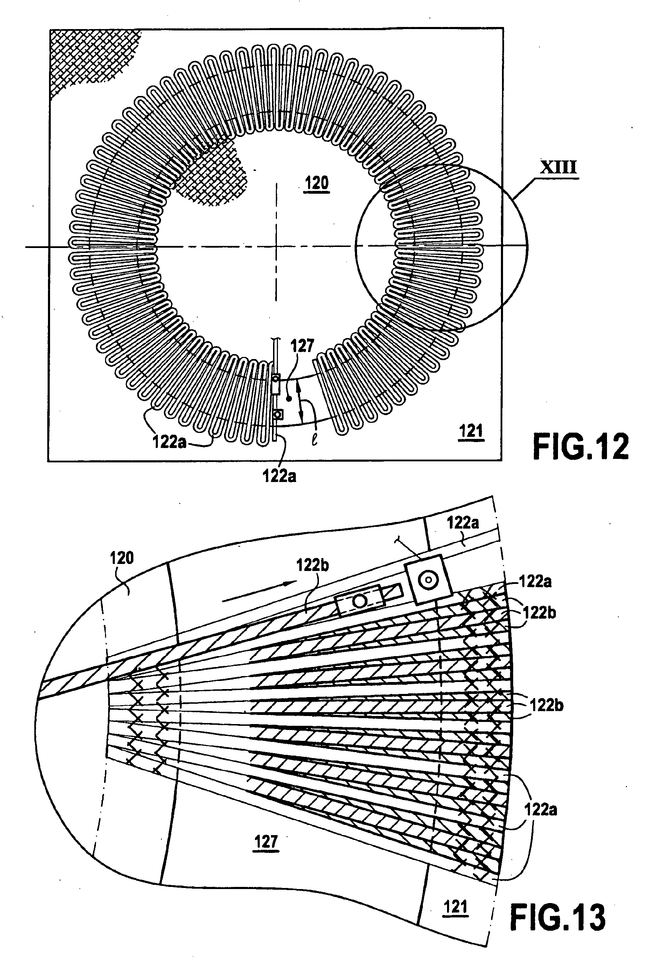

Chaque strate à 0° est réalisée de la même façon que celle décrite précédemment pour la réalisation des strates composant la partie divergent du renfort fibreux de l'ensemble carter-divergent, à savoir comme illustré sur la figure 12, en disposant des fibres 122a, par exemple des fibres de carbone à précurseur PAN, radialement entre deux canevas 120 et 121 définissant un espace annulaire 127 dont la largeur l est choisie légèrement supérieure aux dimensions nécessaires pour la strate à 0°. Les fibres 122a sont disposées en utilisant la technologie de placement TFP (pour "Tailored Fibre Placement"), c'est-à-dire en programmant la machine à broder automatique pour qu'elle place et couse les fibres 122a de manière à remplir au mieux l'espace annulaire 127.

De même que décrit précédemment, pour conserver un taux de fibres sensiblement identique en tout point de la strate, la machine à broder automatique est programmée pour combler les espaces libres entre les fibres 122a en plaçant les fibres supplémentaires 122b dans ces espaces et en les cousant aux fibres adjacentes (figure 13).

Une fois tous les espaces comblés, l'espace annulaire 127 est rempli par une strate contenant un taux de fibres sensiblement constant en tout point. On réalise alors une couture circulaire au voisinage de la périphérie interne de l'espace annulaire pour maintenir les fibres avant le retrait de la strate fibreuse des canevas.

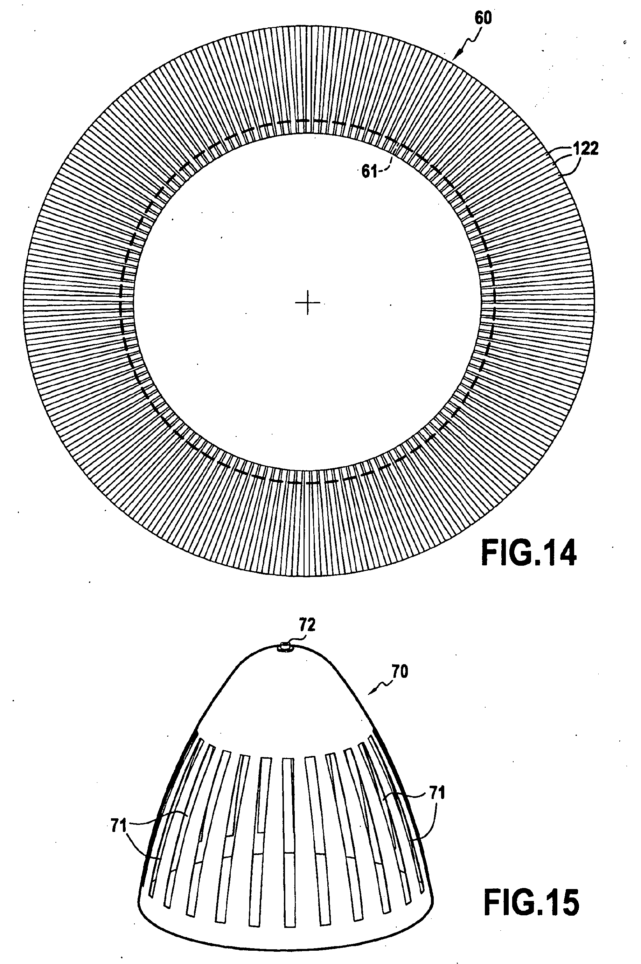

La figure 14 montre une strate à 0° 60 après le retrait des canevas et dont les fibres 122 (comprenant les fibres 122a et 122b) sont maintenues entre elles par la couture circulaire 61, ce qui leur permet de conserver une grande souplesse permettant de la conformer facilement sur un outillage de mise en forme.

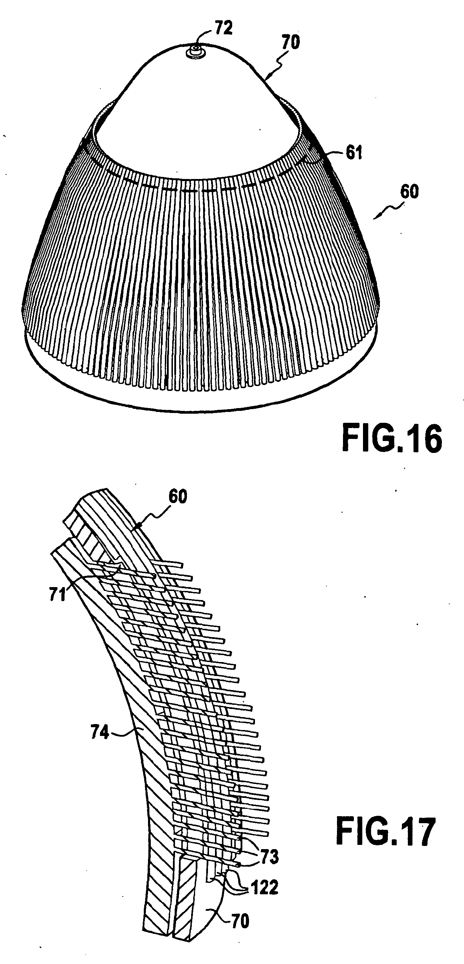

La figure 15 illustre un exemple d'un tel outillage 70 qui peut être utilisé pour réaliser une strate à 90° sur la strate à 0°. L'outillage 70 présente une forme coquetier correspondant à la forme de la préforme fibreuse du carter à réaliser et comportant des fentes 71 pour permettre le passage de picots servant à la réalisation d'une strates à 90°. La figure 16 montre la strate fibreuse à 0° 60 lorsqu'elle est positionnée (i.e. mise en forme) sur l'outillage 70. Puisque les fibres 122 sont relativement libres du côté de la périphérie externe de la strate 60, cette dernière s'adapte parfaitement à la forme sphérique de l'outillage 70. On positionne ensuite dans chaque fente 71 de l'outillage une barrette 74 de support de picots 73 (figure 17).

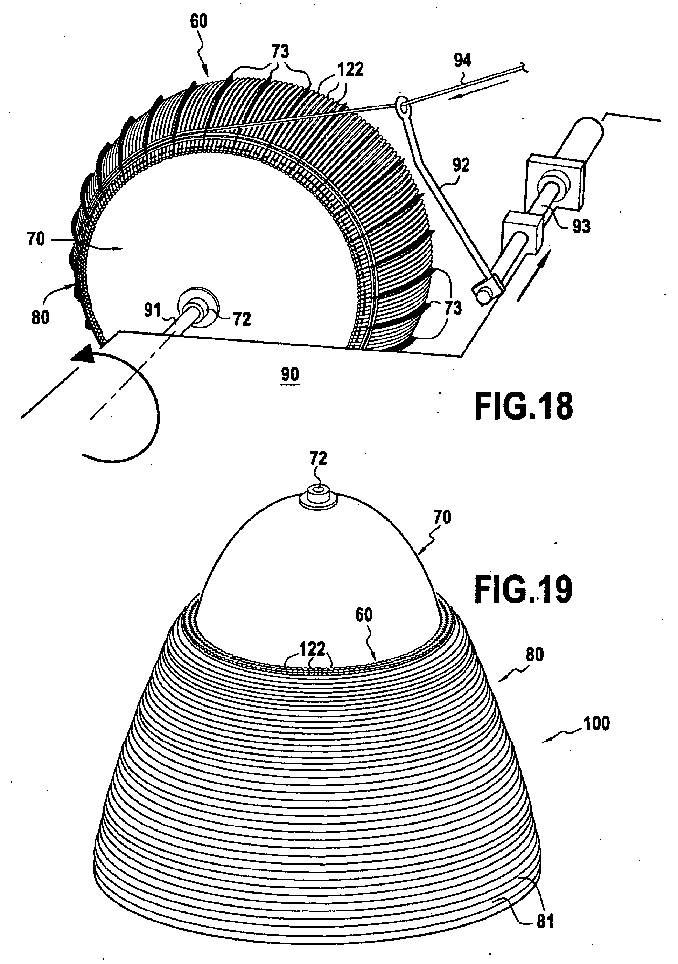

Une strate à 90° 80 est réalisée directement sur la strate à 0° 60 par bobinage filamentaire (figure 18). A cet effet, le sommet 72 de l'outillage 70 est fixé sur un mandrin 91 d'une machine à bobiner 90. De cette façon, la machine 90 entraîne l'outillage 70 en rotation tout en délivrant en continu un fil 94 au moyen d'un passe-fils 92 monté sur un bras 93 qui est décalé au fur et à mesure du bobinage de manière à former des boucles successives sur la strate 60 maintenues entre les picots 73. Le fil 94 est constitué de préférence du même matériau (ex. fibres de carbone à précurseur PAN) que celui composant les fibres 122 de la strate à 0° 60.

Lorsque le bobinage est terminé, la strate à 0° 60 est entièrement recouverte par une strate à 90° 80 (figure 19), c'est-à-dire une strate dont les fibres 81 sont orientées perpendiculairement aux fibres 122 de la strate sous-jacente 60.

Une préforme fibreuse 100 correspondant à la partie carter de l'ensemble carter-divergent à réaliser est ainsi réalisée en alternant sur l'outillage 70 au moins une strate fibreuse à 0° 60 avec une strate à 90° 80 réalisée par bobinage. Chaque strate à 0° est réalisée suivant le procédé décrit précédemment en augmentant éventuellement à chaque fois légèrement la largeur de la couche 60 afin de tenir compte de l'augmentation de volume dans l'empilement.

Selon une variante de réalisation, la préforme fibreuse correspondant à la partie carter peut également être réalisée à partir d'une ou plusieurs strates similaire à la strate 30 décrite précédemment pour la partie divergent, c'est-à-dire des strates comprenant chacune deux séries de fibres disposées respectivement suivant des angles α et -α pouvant correspondre par exemple à +45° et -45°. La méthode de fabrication de ces strates est identique à celle déjà décrite pour la fabrication de la strate 30 et ne sera pas, par conséquent, décrite une nouvelle fois. La ou les strates ainsi fabriquées pour former la préforme fibreuse du carter diffèrent de celles réalisées pour la préforme du divergent en ce qu'elles présentent une largeur plus importante afin de couvrir chacune la surface utile de l'outillage 70 correspondant à la surface du carter à réaliser (surface couverte par la strate 60 sur la figure 16).

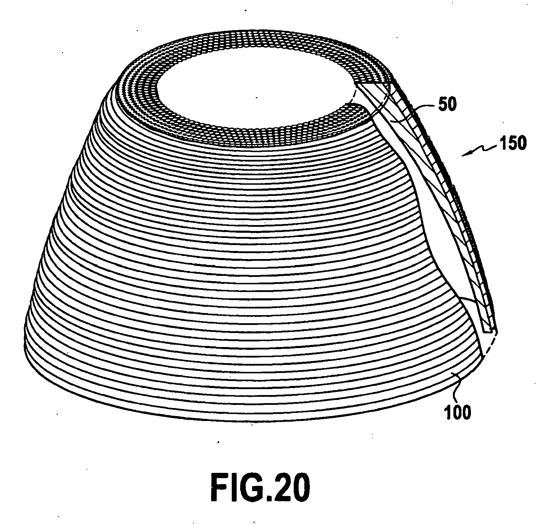

Comme illustré sur la figure 20, on réunit ensuite la première préforme fibreuse 50 correspondant à la partie divergent avec la deuxième préforme fibreuse 100 correspondant à la partie carter de manière à former le renfort fibreux 150 de l'ensemble carter-divergent.

Selon une variante de réalisation, la deuxième préforme du carter peut être formée directement sur la première préforme du divergent. Dans le cas d'une préforme de carter réalisée avec des strates à 0° et 90°, la préforme fibreuse correspondant au divergent est réalisée sur un outil similaire à l'outil 70 comprenant en outre un rebord à sa base pour permettre l'empilement des strates suivant un angle un angle β d'environ 10° comme décrit précédemment. La préforme correspondant au carter est ensuite formée en disposant sur la préforme du divergent au moins une strate à 0° et une strate à 90° réalisée par bobinage sur la strate à 0° comme expliqué précédemment. Dans le cas d'une préforme de carter réalisée à partir de strates comprenant chacune deux séries de fibres suivant des angles α et -α, ces strates sont directement disposées sur la préforme du divergent.

L'étape suivante du procédé de réalisation de l'ensemble carter-divergent conformément à la présente invention consiste à densifier le renfort fibreux 150 avec une matrice commune en une seule opération. A cet effet, on imprègne le renfort 150 avec une résine thermodurcissable que l'on polymérise par traitement thermique.

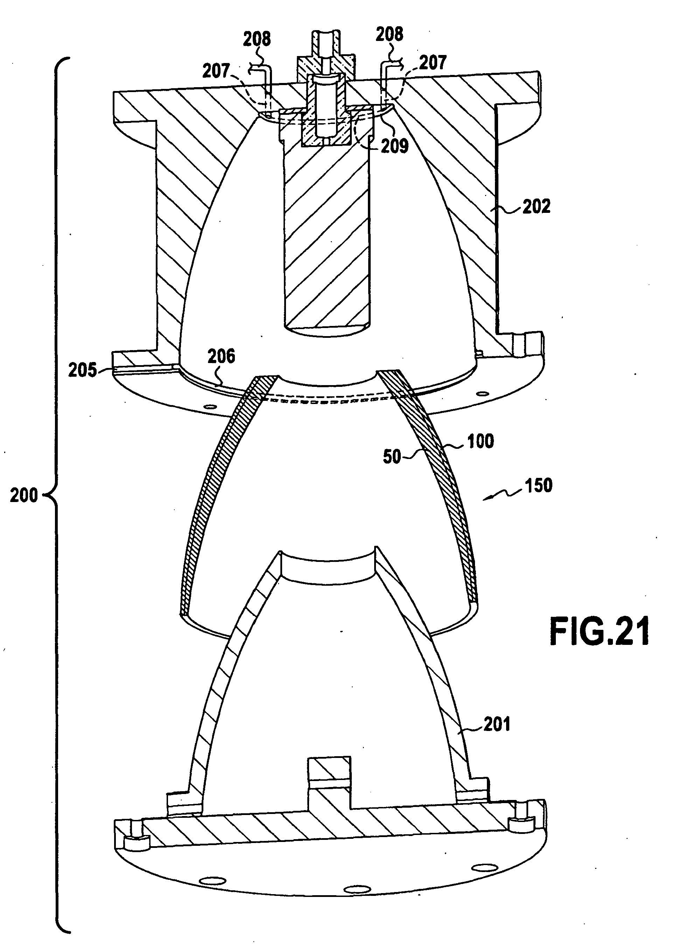

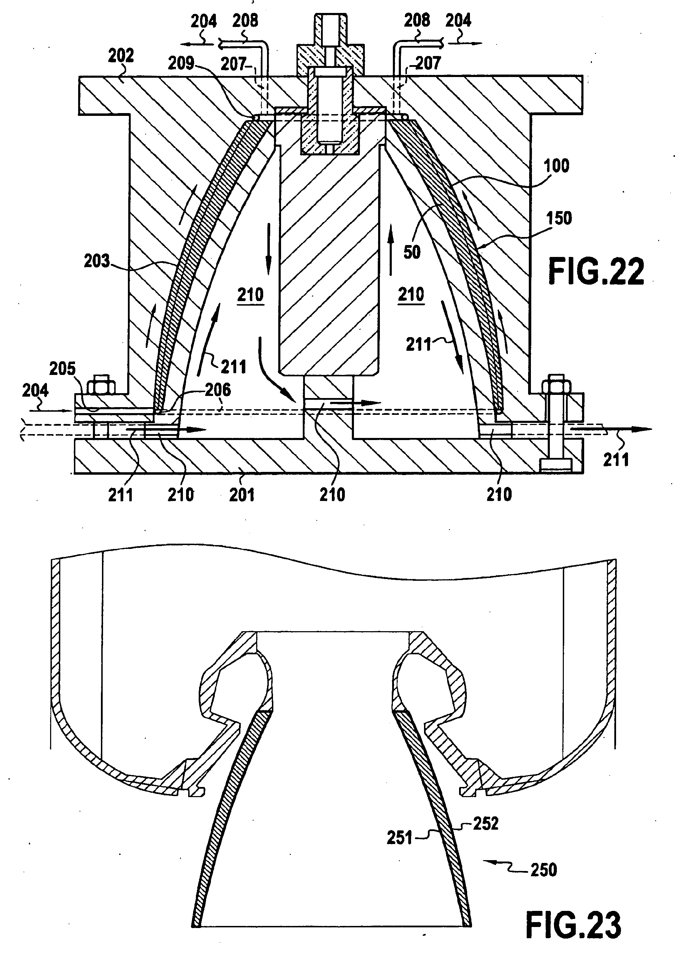

On utilise à cet effet le procédé bien connu de moulage par transfert dit RTM ("Resin Transfert Moulding") qui consiste à imprégner le renfort fibreux avec une résine et à procéder à sa polymérisation dans un même moule. Pour mettre en oeuvre la méthode de moulage par transfert RTM dans le cadre de la présente invention, un outillage spécifique 200, présenté sur les figures 21 et 22, a été développé pour permettre l'injection et la polymérisation d'une résine dans le renfort fibreux de l'ensemble carter-divergent.

Plus précisément comme illustré sur la figure 21, l'outillage 200 comprend un moule 201 et un contre-moule 202, réalisé par exemple en acier, entre lesquels est disposé le renfort fibreux 150 composé des première et seconde préformes fibreuses 50 et 100.

Une fois assemblés entre eux comme illustré sur la figure 22, le moule 201 et le contre-moule 202 définissent un espace interne 203 occupé par le renfort 150 et dans lequel est injectée une résine 204 via un orifice d'alimentation 205 ménagé sur la partie inférieure du contre-moule 202. La pression d'injection est contrôlée au niveau de l'orifice d'alimentation 205. L'orifice d'alimentation 205 communique avec un canal circulaire 206 qui permet de distribuer la résine sur toute la périphérie de la base du renfort 150. Le contre-moule 202 comprend en outre dans sa partie supérieure un canal circulaire 209 communiquant avec des orifices 207, par exemple au nombre de trois, qui sont reliés à des conduits d'évacuation 208 sous vide partiel. Cette configuration permet l'établissement d'un gradient de pression entre la partie inférieure du renfort 150 où la résine est injectée et la partie supérieure du renfort située à proximité des orifices 207. De cette manière, la résine thermodurcissable 204 injectée au niveau du grand diamètre du renfort 150 va imprégner progressivement l'ensemble du renfort en circulant dans l'espace 203 jusqu'au canal circulaire 209 où le surplus de résine présent est évacué par les orifices 207. Le maintien de la fermeture de l'outillage 200 est assuré par une presse hydraulique (non représentée sur les figures).

Pour permettre l'initiation de la polymérisation de la résine injectée dans le renfort fibreux, l'outillage doit être porté et maintenu à une température correspondant à la température de polymérisation de la résine utilisée. A cet effet, l'outillage 200 comprend des moyens de chauffage qui peuvent être de différents types (résistifs, inductifs, etc.). Dans le mode de réalisation de l'outillage présenté ici, le chauffage du coeur de l'outillage est assuré par un circuit de circulation 210 ménagé dans le moule 201 et dans lequel on fait circuler de l'huile chaude 211. La résine est quant à elle injectée dans l'outillage à la température d'injection adéquate par chauffage de la tête d'injection (non représenté sur les figures) qui est connectée avec l'orifice d'alimentation 205. Un avantage supplémentaire de l'utilisation d'une circulation d'huile comme moyen de chauffage est que cette huile permet en outre de réguler la température dans le renfort car la polymérisation une fois déclenchée peut engendrer une réaction exothermique.

La résine utilisée dans la présente invention doit permettre de former dans la pièce finale, correspondant à l'ensemble carter-divergent, une matrice qui présente des caractéristiques de résistance vis-à-vis à la fois des efforts mécaniques et de l'ablation. A cet effet, la résine utilisée est une résine de polyaddition qui présente, une fois polymérisée, des caractéristiques structurales qui sont utiles en particulier pour la partie carter de la pièce finale. Cette résiné présente en outre un taux de coke d'au moins 50 % qui permet d'assurer à la matrice formée après polymérisation une bonne tenue à l'ablation qui est nécessaire en particulier pour la partie divergent dont la paroi interne est soumise à l'écoulement des gaz de combustion.

En outre, la résine doit être adaptée pour les procédés RTM, c'est-à-dire présenter de préférence une faible viscosité pour faciliter son injection dans les fibres du renfort. La résine utilisée peut être, par exemple, une résine cyanate ester de type phénolique triazine.

Après l'injection et la polymérisation, la pièce est démoulée. Elle peut éventuellement subir un cycle de post-cuisson pour améliorer ses caractéristiques thermomécaniques (augmentation de la température de transition vitreuse), comme par exemple un cycle de 2 heures à 180 °C. Au final, la pièce est détourée pour enlever l'excès de résine et les chanfreins sont usinés. Aucun autre usinage n'est nécessaire puisque, la pièce étant moulée, elle respecte les cotes exigées.

Comme illustré sur la figure 23, on dispose alors d'une pièce unique formant un ensemble carter-divergent 250 qui peut être utilisé directement pour équiper un propulseur, l'ensemble 250 comportant une partie interne 251 réalisée à partir d'un premier type de fibre présentant des caractéristiques plutôt thermiques pour résister aux gaz chauds du propulseur et une partie externe 252 réalisée à partir d'un deuxième type de fibres présentant des caractéristiques plutôt structurales pour conférer une bonne rigidité et résister aux efforts mécaniques.

## Revendications

1. Procédé de réalisation d'un ensemble carter-divergent comprenant les étapes suivantes :
- formation d'un renfort fibreux (150) comprenant la réalisation d'une première préforme fibreuse (50) avec un premier type de fibre, ladite première préforme correspondant à la partie divergent de l'ensemble carter-divergent à réaliser, et la réalisation d'une seconde préforme fibreuse (100) avec un second type de fibre différent du premier type de fibre, ladite seconde préforme correspondant à la partie carter de l'ensemble carter-divergent à réaliser et étant disposée sur la première préforme,
- maintien du renfort fibreux dans une forme identique à celle de l'ensemble carter-divergent à réaliser,
- imprégnation dudit renfort fibreux avec une résine thermodurcissable (204) et polymérisation de la résine.

2. Procédé selon la revendication 1, **caractérisé en ce que** la première préforme fibreuse (50) est réalisée avec des fibres présentant une conductivité thermique au moins inférieure à 50 W.m⁻¹.K⁻¹.

3. Procédé selon la revendication 2, **caractérisé en ce que** la première préforme fibreuse (50) est réalisée avec des fibres de carbone à précurseur brai, ou des fibres de carbone à précurseur PAN (polyacrylonitrile), ou des fibres de carbone à précurseur rayonne.

4. Procédé selon l'une quelconque des revendications 1 à 3, **caractérisé en ce que** la seconde préforme fibreuse (100) est réalisée avec des fibres présentant une résistance à la traction d'au moins 3000 MPa et un module de Young d'au moins 200 GPa.

5. Procédé selon la revendication 4, **caractérisé en ce que** la seconde préforme fibreuse (100) est réalisée avec des fibres de carbone à précurseur PAN ou des fibres de carbone à précurseur brai.

6. Procédé selon l'une quelconque des revendications 1 à 5, **caractérisé en ce que** la résine thermodurcissable (204) est une résine de polyaddition ayant des caractéristiques structurales et un taux de coke d'au moins 50 %.

7. Procédé selon l'une quelconque des revendications 1 à 6, **caractérisé en ce que** la première préforme fibreuse (50) est réalisée à partir d'une pluralité de strates fibreuses annulaires (30₁-30ᵢ) comprenant chacune au moins une première série de fibres (22) orientées suivant un angle α et une deuxième série de fibres (23) orientées suivant un angle - α.

8. Procédé selon la revendication 7, **caractérisé en ce que** la première préforme fibreuse est réalisée par empilement desdites strates fibreuses annulaires (30₁-30ⱼ) sur un outillage (40) de forme coquetier ou conique, chaque strate étant disposée sur ledit outillage suivant un angle β par rapport à l'axe de l'outillage.

9. Procédé selon la revendication 7 ou 8, **caractérisé en ce que** lesdites première et deuxième séries de fibres (22, 23) de chaque strate fibreuse annulaire (30) sont réalisées par placement et couture automatiques de fibres entre deux canevas (20, 21) définissant un espace annulaire (27), chaque strate (30) étant extraite des canevas par découpe après réalisation d'une liaison circulaire (31) dans ladite strate.

10. Procédé selon l'une quelconque des revendications 1 à 9, **caractérisé en ce que** la deuxième préforme (150) est réalisée à partir d'au moins une première et une deuxième strates fibreuses superposées (60, 80), la première strate (60) comportant des fibres (122) orientées suivant une direction déterminée, la deuxième strate (80) étant réalisée en disposant sur la première strate (60) une strate de fibres (81) orientées perpendiculairement aux fibres (122) de la première strate (60).

11. Procédé selon la revendication 10, **caractérisé en ce que** la première strate (60) est réalisée par placement et couture automatiques de fibres (122) entre deux canevas (120, 121) définissant un espace annulaire (127), la strate étant extraite des canevas par découpe après réalisation d'une liaison circulaire (61) dans ladite strate, et **en ce que** la deuxième strate (80) est réalisée par bobinage filamentaire sur la première strate maintenue en forme sur un outillage conique (70).

12. Procédé selon l'une quelconque des revendications 1 à 9, **caractérisé en ce que** la deuxième préforme fibreuse est réalisée à partir d'au moins une strate fibreuse comprenant au moins une première et une deuxième séries de fibres superposées, la première série comportant des fibres orientées suivant un angle a et la seconde série comportant des fibres orientées suivant un angle -α.

13. Procédé selon la revendication 12, **caractérisé en ce que** lesdites première et deuxième séries de fibres de chaque strate fibreuse sont réalisées par placement et couture automatiques de fibres entre deux canevas définissant un espace annulaire, chaque strate étant extraite des canevas par découpe après réalisation d'une liaison circulaire dans ladite strate.

14. Procédé selon l'une quelconque des revendications 1 à 13, **caractérisé en ce que** les première et seconde préformes sont réalisées indépendamment l'une de l'autre, ladite seconde préforme étant disposée sur ladite première préforme pour former le renfort fibreux.

15. Procédé selon l'une quelconque des revendications 1 à 13, **caractérisé en ce que** la deuxième préforme fibreuse est réalisée directement sur la première préforme fibreuse de manière à former le renfort fibreux.

16. Procédé selon l'une quelconque des revendications 1 à 15, **caractérisé en ce que** le renfort fibreux (150) formé des première et seconde préformes fibreuses superposées (50, 100) est placé dans un outillage (200), l'outillage comprenant un moule (201) et un contre-moule (202) définissant un espace interne (203) dans lequel est maintenu le renfort (150) et **en ce que** la résine thermodurcissable (204) est injectée à la base du renfort, un gradient de pression étant établi dans ledit espace interne (203) de manière à faire circuler la résine injectée à la base du renfort vers le sommet dudit renfort.

17. Procédé selon la revendication 16, caractérisé en que l'outillage comprend des moyens de chauffage (210, 211) pour maintenir le renfort fibreux à une température sensiblement uniforme.

18. Procédé selon la revendication 17, **caractérisé en ce que** l'outillage est chauffé par circulation d'un fluide de régulation thermique (211).

## Patentansprüche

1. Verfahren zur Herstellung einer Anordnung aus Gehäuse und divergentem Teil, umfassend die folgenden Schritte:
- Ausbilden einer Faserverstärkung (150), umfassend das Herstellen eines ersten Faservorformlings (50) mit einer ersten Faserart, wobei der erste Vorformling dem divergenten Teil der herzustellenden Anordnung aus Gehäuse und divergentem Teil entspricht, sowie das Herstellen eines zweiten Faservorformlings (100) mit einer von der ersten Faserart abweichenden zweiten Faserart, wobei der zweite Vorformling dem Gehäuseteil der herzustellenden Anordnung aus Gehäuse und divergentem Teil entspricht und auf dem ersten Vorformling angeordnet ist,
- Halten der Faserverstärkung in einer Form, die mit derjenigen der herzustellenden Anordnung aus Gehäuse und divergentem Teil identisch ist,
- Imprägnieren der Faserverstärkung mit einem in Wärme aushärtenden Harz (204) und Polymerisieren des Harzes.

2. Verfahren nach Anspruch 1, **dadurch gekennzeichnet, daß** der erste Faservorformling (50) mit Fasern hergestellt ist, die eine Wärmeleitfähigkeit wenigstens kleiner als 50 W.m⁻¹.K⁻¹ aufweisen.

3. Verfahren nach Anspruch 2, **dadurch gekennzeichnet, daß** der erste Faservorformling (50) mit Kohlenstoffasern mit Pech-Precursor oder Kohlenstoffasern mit PAN-Precursor (Polyacrylnitril) oder Kohlenstoffasern mit Rayon-Precursor hergestellt ist.

4. Verfahren nach einem der Ansprüche 1 bis 3, **dadurch gekennzeichnet, daß** der zweite Faservorformling (100) mit Fasern hergestellt ist, die eine Zugfestigkeit von wenigstens 3000 MPa und einen Elastizitätsmodul von wenigstens 200 GPa aufweisen.

5. Verfahren nach Anspruch 4, **dadurch gekennzeichnet, daß** der zweite Faservorformling (100) mit Kohlenstoffasern mit PAN-Precursor oder Kohlenstoffasern mit Pech-Precursor hergestellt ist.

6. Verfahren nach einem der Ansprüche 1 bis 5, **dadurch gekennzeichnet, daß** das in Wärme aushärtende Harz (204) ein Polyadditionsharz mit Strukturmerkmalen und einem Koksgehalt von wenigstens 50 % ist.

7. Verfahren nach einem der Ansprüche 1 bis 6, **dadurch gekennzeichnet, daß** der erste Faservorformling (50) aus einer Vielzahl von ringförmigen Faserlagen (30₁-30ⱼ) hergestellt ist, die jeweils wenigstens eine erste Reihe von Fasern (22), welche unter einem Winkel α ausgerichtet sind, und eine zweite Reihe von Fasern (23), die unter einem Winkel -α ausgerichtet sind, umfassen.

8. Verfahren nach Anspruch 7, **dadurch gekennzeichnet, daß** der erste Faservorformling durch Stapeln der ringförmigen Faserlagen (30₁-30ᵢ) auf einem eierbecher- oder kegelförmigen Werkzeug (40) ausgebildet wird, wobei jede Lage auf dem Werkzeug unter einem Winkel β gegenüber der Achse des Werkzeugs angeordnet wird.

9. Verfahren nach Anspruch 7 oder 8, **dadurch gekennzeichnet, daß** die erste und die zweite Reihe von Fasern (22, 23) einer jeden ringförmigen Faserlage (30) durch automatisches Anordnen und Nähen von Fasern zwischen zwei einen ringförmigen Raum (27) definierenden Rahmen (20, 21) ausgebildet werden, wobei jede Lage (30) nach Ausbilden einer kreisförmigen Verbindung (31) in der Lage aus den Rahmen herausgeschnitten wird.

10. Verfahren nach einem der Ansprüche 1 bis 9, **dadurch gekennzeichnet, daß** der zweite Vorformling (150) aus wenigstens einer ersten und einer zweiten Faserlage (60, 80), die übereinander angeordnet sind, ausgebildet ist, wobei die erste Lage (60) in einer bestimmten Richtung ausgerichtete Fasern (122) umfaßt, wobei die zweite Lage (80) dadurch ausgebildet wird, daß auf der ersten Lage (60) eine Lage aus Fasern (81), welche senkrecht zu den Fasern (122) der ersten Lage (60) ausgerichtet sind, angeordnet wird.

11. Verfahren nach Anspruch 10, **dadurch gekennzeichnet, daß** die erste Lage (60) durch automatisches Anordnen und Nähen von Fasern (122) zwischen zwei einen ringförmigen Raum (127) definierenden Rahmen (120, 121) ausgebildet wird, wobei die Lage nach Ausbilden einer kreisförmigen Verbindung (61) in der Lage aus den Rahmen herausgeschnitten wird, und daß die zweite Lage (80) durch Fadenwickeln auf der an einem konischen Werkzeug (70) in Form gehaltenen ersten Lage ausgebildet wird.

12. Verfahren nach einem der Ansprüche 1 bis 9, **dadurch gekennzeichnet, daß** der zweite Faservorformling aus wenigstens einer Faserlage, die wenigstens eine erste und eine zweite Reihe von Fasern, welche übereinander angeordnet sind, umfaßt, ausgebildet ist, wobei die erste Reihe unter einem Winkel α ausgerichtete Fasern umfaßt und die zweite Reihe unter einem Winkel -α ausgerichtete Fasern umfaßt.

13. Verfahren nach Anspruch 12, **dadurch gekennzeichnet, daß** die erste und die zweite Reihe von Fasern einer jeden Faserlage durch automatisches Anordnen und Nähen von Fasern zwischen zwei einen ringförmigen Raum definierenden Rahmen ausgebildet werden, wobei jede Lage nach Ausbilden einer kreisförmigen Verbindung in der Lage aus den Rahmen herausgeschnitten wird.

14. Verfahren nach einem der Ansprüche 1 bis 13, **dadurch gekennzeichnet, daß** der erste und der zweite Vorformling unabhängig voneinander ausgebildet werden, wobei der zweite Vorformling auf dem ersten Vorformling angeordnet wird, um die Faserverstärkung zu bilden.

15. Verfahren nach einem der Ansprüche 1 bis 13, **dadurch gekennzeichnet, daß** der zweite Faservorformling direkt auf dem ersten Faservorformling ausgebildet wird, um die Faserverstärkung zu bilden.

16. Verfahren nach einem der Ansprüche 1 bis 15, **dadurch gekennzeichnet, daß** die aus den übereinander angeordneten ersten und zweiten Faservorformlingen (50, 100) gebildete Faserverstärkung (150) in einem Werkzeug (200) angeordnet wird, wobei das Werkzeug eine Form (201) und eine Gegenform (202) umfaßt, die einen Innenraum (203) definieren, in dem die Verstärkung (150) gehalten wird, und daß das in Wärme aushärtende Harz (204) an der Basis der Verstärkung eingespritzt wird, wobei in dem Innenraum (203) ein Druckgradient aufgebaut wird, um das an der Basis der Verstärkung eingespritzte Harz in Richtung des Scheitels der Verstärkung fließen zu lassen.

17. Verfahren nach Anspruch 16, **dadurch gekennzeichnet, daß** das Werkzeug Heizmittel (210, 211) umfaßt, um die Faserverstärkung auf einer im wesentlichen gleichbleibenden Temperatur zu halten.

18. Verfahren nach Anspruch 17, **dadurch gekennzeichnet, daß** das Werkzeug durch Zirkulieren eines Wärmeregulierungsfluids (211) erhitzt wird.

## Claims

1. A method of making a casing-and-diverging-portion unit, the method comprising the following steps:
• forming fiber reinforcement (150) by making a first fiber preform (50) with a first type of fiber, said first preform corresponding to the diverging portion of the casing-and-diverging-portion unit that is to be made, and making a second fiber preform (100) with a second type of fiber, different from the first type of fiber, said second preform corresponding to the casing portion of the casing-and-diverging-portion unit that is to be made, and being placed on the first preform;
• maintaining the fiber reinforcement in a shape identical to that of the casing-and-diverging-portion unit that is to be made; and
• impregnating said fiber reinforcement with a thermosetting resin (204) and polymerizing the resin.

2. A method according to claim 1, **characterized in that** the first fiber preform (50) is made with fibers presenting thermal conductivity that is less than 50 W.m⁻¹.K⁻¹_{.}

3. A method according to claim 2, **characterized in that** the first fiber preform (50) is made with pitch-precursor carbon fibers or with PAN-precursor carbon fibers, or with rayon-precursor carbon fibers.

4. A method according to any one of claims 1 to 3, **characterized in that** the second fiber preform (100) is made with fibers presenting traction strength of at least 3000 MPa and a Young's modulus of at least 200 GPa.

5. A method according to claim 4, **characterized in that** the second fiber preform (100) is made with PAN-precursor carbon fibers or with pitch-precursor carbon fibers.

6. A method according to any one of claims 1 to 5, **characterized in that** the thermosetting resin (204) is a polyaddition resin having structural characteristics and a coke fraction of at least 50%.

7. A method according to any one of claims 1 to 6, **characterized in that** the first fiber preform (50) is made from a plurality of annular fiber plies (30₁-30ᵢ), each comprising at least a first series of fibers (22) oriented at an angle α and a second series of fibers (23) oriented at an angle -α.

8. A method according to claim 7, **characterized in that** the first fiber preform is made by stacking said annular fiber plies (30₁-30ᵢ) on tooling (40) of egg-cup or conical shape, each ply being disposed on said tooling at an angle β relative to the axis of the tooling.

9. A method according to claim 7 or claim 8, **characterized in that** said first and second series of fibers (22, 23) of each annular fiber ply (30) are made by automatic placement and stitching of fibers between two canvases (20, 21) defining an annular space (27), each ply (30) being extracted from the canvases by being cut out after a circular connection (31) has been made in said ply.

10. A method according to any one of claims 1 to 9, **characterized in that** the second preform (150) is made from at least first and second superposed fiber plies (60, 80), the first ply (60) having fibers (122) oriented in a determined direction, the second ply (80) being made by disposing on the first ply (60) a ply of fibers (81) that are oriented perpendicularly to the fibers (122) of the first ply (60).

11. A method according to claim 10, **characterized in that** the first ply (60) is made by automatic placing and stitching of fibers (122) between two canvases (120, 121) defining an annular space (127), the ply being extracted from the canvases by being cut out after a circular connection (61) has been made in said ply, and **in that** the second ply (80) is made by filamentary winding on the first ply while it is held in shape on conical tooling (70).

12. A method according to any one of claims 1 to 9, **characterized in that** the second fiber preform is made from at least one fiber ply comprising at least first and second series of superposed fibers, the first series having fibers oriented at an angle α and a second series having fibers oriented at an angle -α.

13. A method according to claim 12, **characterized in that** said first and second series of fibers of each fiber ply are made by automatic placing and stitching of fibers between two canvases defining an annular space, each ply being extracted from the canvases by being cut out after making a circular connection in said ply.

14. A method according to any one of claims 1 to 13, **characterized in that** the first and second preforms are made independently of each other, said second preform being placed on said first preform in order to form the fiber reinforcement.

15. A method according to any one of claims 1 to 13, **characterized in that** the second fiber preform is made directly on the first fiber preform in order to form the fiber reinforcement.

16. A method according to any one of claims 1 to 15, **characterized in that** the fiber reinforcement (150) made up of the superposed first and second fiber preforms (50, 100) is placed in tooling (200), the tooling comprising a mold core (201) and an outer mold (202) defining an internal space (203) in which the reinforcement (150) is held, and **in that** the thermosetting resin (204) is injected into the base of the reinforcement, with a pressure gradient being established in said internal space (203) so as to cause the resin injected into the base of the reinforcement to flow towards the top of said reinforcement.

17. A method according to claim 16, **characterized in that** the tooling includes heater means (210, 211) for maintaining the fiber reinforcement at a temperature that is substantially uniform.

18. A method according to claim 17, **characterized in that** the tooling is heated by circulating a temperature-regulated fluid (211).
